# EUROPÄISCHE PATENTSCHRIFT

(11) **EP 2 095 483 B1**
(45) Veröffentlichungstag und Bekanntmachung des Hinweises auf die Patenterteilung: **26.09.2018**
(21) Anmeldenummer: 07819431.3
(22) Anmeldetag: 30.10.2007
(51) Int. Cl.: H02J 50/10

(54) **MASCHINE ODER ANLAGE UND VERFAHREN**
MACHINE OR INSTALLATION AND METHOD
MACHINE OU DISPOSITIF ET PROCÉDÉ

(30) Priorität: 17.11.2006 DE 102006054614
(43) Veröffentlichungstag der Anmeldung: 02.09.2009
(73) Patentinhaber: SEW-EURODRIVE GmbH & Co. KG, 76646 Bruchsal (DE)
(72) Erfinder: SIMON, Olaf, 76646 Bruchsal (DE); SCHMIDT, Josef, 76676 Graben-Neudorf (DE); PODBIELSKI, Leobald, 76199 Karlsruhe (DE); UHL, Thomas, 76646 Bruchsal (DE); MAHLEIN, Jochen, 76139 Karlsruhe (DE); SCHÖPFER, Claus, 69168 Wiesloch (DE)
(74) Vertreter: Tüngler, Eberhard
(86) Internationale Anmeldenummer: PCT/EP2007/009390
(87) Internationale Veröffentlichungsnummer: WO 2008/058627

(56) Entgegenhaltungen:
- DE-A1- 10 014 954
- DE-A1- 10 147 859
- DE-A1- 10 147 859
- DE-A1- 10 360 599
- DE-A1-102004 031 580
- GB-A- 2 350 724
- GB-A- 2 350 724
- US-A1- 2005 127 868

## Beschreibung

Die Erfindung betrifft eine Maschine oder Anlage.

Aus der DE 44 46 779 ist resonante berührungslose Energieübertragung bekannt, wobei trotz schwacher induktiver Kopplung große Leistungen übertragbar sind.
Aus der US 2005/127868 A1 ist eine induktive Batterieaufladung bekannt.
Aus der DE 100 14 954 A1 ist eine Elektrohängebahn mit berührungsloser induktiver Energieübertragung bekannt.

Aus der DE 10 2004 031 580 A1 ist eine Anordnung zur berührungslosen induktiven Übertragung elektrischer Leistung an mehrere Verbraucher bekannt.
Aus der DE 103 60 599 A1 ist eine Anlage mit induktiv versorgbaren Verbrauchern bekannt. Aus der DE 101 47 859 A1 ist als nächstliegender Stand der Technik eine Elektrohängebahn mit berührungsloser Energie- und Datenübertragung bekannt.
Aus der GB 2 350 724 A ist eine magnetische Aktuatoranordnung bekannt.
Der Erfindung liegt daher die Aufgabe zugrunde, Anlagen derart weiterzubilden, dass prüfbare Einheiten verwendbar sind.
Erfindungsgemäß wird die Aufgabe bei der Maschine oder Anlage nach den in Anspruch 1 angegebenen Merkmalen gelöst.

Wichtige Merkmale der Erfindung bei der Maschine oder Anlage sind, dass sie ein bewegbar angeordnetes Teil umfasst,

wobei am Teil zumindest eine Sekundärspule, eine elektronische Schaltung und zumindest ein Verbraucher vorgesehen ist,
wobei die Sekundärspule induktiv an einen Primärleiter ankoppelbar oder angekoppelt ist,
wobei am Teil eine aus der Sekundärspule versorgte elektronische Schaltung vorgesehen ist, aus der zumindest ein Verbraucher versorgbar ist,
wobei die elektronische Schaltung und mindestens der Verbraucher zum Datenaustausch über ein Bussystem verbunden sind.

Von Vorteil ist dabei, dass das Teil bewegbar angeordnet ist und trotzdem große elektrische Leistungen im Hunderte Watt bis Kilowattbereich und mehr übertragbar sind. Zusätzlich ist durch höher frequente Aufmodulation, beispielsweise im Hundert Kilohertzbereich bis wenige Megahertz-Bereich, eine Übertragung von Daten ermöglicht, die dabei zwischen dem stationären Teil und der elektronischen Schaltung des Teils übertragbar sind. Die elektronische Schaltung verarbeitet die Daten dann derart, dass der über den Bus zu den Verbrauchern vorsehbare Datenstrom entsprechend zusammenhängt. Dabei ist die elektronische Schaltung in der Lage, Steuerfunktionen für die Verbraucher zu übernehmen. Auf diese Weise ist es ermöglicht nur wenige Daten, also einen geringen Datenstrom zum stationären Teil zu übertragen und trotzdem innerhalb des Teils, insbesondere innerhalb des Bussystems, einen großen Datenstrom vorzusehen. Da der Datenbus hierzu mittels elektrischer Leitungen realisierbar ist, ist eine fehlersichere Datenübertragung zwischen den Verbrauchern und der elektronischen Schaltung realisierbar.

Bei einer vorteilhaften Ausgestaltung ist der Primärleiter zumindest mit einem mittelfrequenten Strom beaufschlagt, insbesondere mit einer Frequenz zwischen 10 und 100 kHz, wobei der Sekundärspule ein Kondensator in Reihe oder parallel beschaltet ist, wobei die zugehörige Resonanzfrequenz im Wesentlichen der Mittelfrequenz entspricht. Von Vorteil ist dabei, dass die Energie über einen großen oder wechselhaft kleinen oder großen Luftspalt die Energie übertragbar ist, wobei bei jedem Luftspalt ein hoher Wirkungsgrad erreichbar ist.

Bei einer vorteilhaften Ausgestaltung ist zumindest eine Komponente des Teils zur Datenübertragung mit dem Primärleiter induktiv oder kapazitiv gekoppelt vorgesehen. Von Vorteil ist dabei, dass die Daten berührungslos übertragbar sind und der Primärleiter selbst nicht nur zur Übertragung der elektrischen Leistung sondern auch zur Übertragung von Daten nutzbar ist. Dabei handelt es sich aber nicht nur um Daten für einen Verbraucher sondern für ein Gesamtsystem, umfassend die elektronische Schaltung und die nachgeordneten Verbraucher. Somit ist eine dezentrale Steuerung mit einem Datenstrom zu anzubinden an einen Rechner, der mit dem stationären Teil verbunden ist oder von ihm umfasst ist. Dieser Rechner ist beispielsweise als Zentralrechner ausgeführt und mit weiteren dezentralen Steuerungen verbunden, die allerdings auf nicht drehenden Maschinenteilen oder Anlagenteilen angeordnet sind.

Teile der elektronischen Schaltung oder die gesamte elektronische Schaltung sind auch in einen oder mehrere Verbraucher integrierbar, so dass eines der Gehäuse einsparbar ist.

Bei einer vorteilhaften Ausgestaltung ist eine zweite Sekundärspule für Datenübertragung am Teil vorgesehen. Von Vorteil ist dabei, dass die Daten abgetrennt von der Leistung übertragbar sind, insbesondere hin- und rückübertragbar zur Primärseite. Somit ist eine geringere Fehlerrate erreichbar, da weniger Störungen vorliegen.

Bei einer vorteilhaften Ausgestaltung sind Mittel zur Auf- und Demodulation höher frequenter Stromanteile auf den Primärleiter vorgesehen, insbesondere primärseitig und sekundärseitig. Von Vorteil ist dabei, dass keine zusätzlichen Trägermedien notwendig sind sondern das schon vorhandene Leistungskabel zu verwenden ist.

Bei einer vorteilhaften Ausgestaltung ist zumindest ein Teilbereich des Primärleiters kreisbogenförmig um das Teil herum verlegt. Von Vorteil ist dabei, dass bei einer Drehbewegung des Teils ein U-, C- oder E-förmiger Kern für die Sekundärspule verwendbar ist. Dabei ist das U, C oder E als Querschnittsausprägung des Kerns zu verstehen und derart orientierbar, dass es nach radial außen mit seinen Schenkeln zeigt. Somit ist dann die Zuführung beziehungsweise Wegführung an den beiden Enden des Kreisbogens in radialer Richtung vorsehbar. Alternativ sind die Schenkel auch in einer der axialen Richtungen ausrichtbar. Somit ist dann die Zuführung und Wegführung zum Kreisbogen in axialer Richtung vorsehbar.
Bei einer vorteilhaften Ausgestaltung sind ein oder mehrere Verbraucher als Antriebe ausgeführt, mit denen zwei oder mehr stabile Anfahrpositionen, insbesondere nur zwei oder mehr stabile Anfahrpositionen, anfahrbar sind. Von Vorteil ist dabei, dass die Steuerinformation schon mit der Leistungsübertragung codierbar ist. Insbesondere ist schon ein Einschalten der Leistungsübertragung auch als Steuerbefehl codierbar. In Weiterbildung ist auch ein Verwenden oder Weglassen von positiven und/oder negativen Halbwellen zum Codieren von Information vorsehbar.
Bei einer vorteilhaften Ausgestaltung sind ein oder mehrere Verbraucher als bistabile Stellantriebe ausgeführt. Von Vorteil ist dabei, dass schon das Einschalten oder Abschalten der Energiezufuhr als Steuerinformation zum Auslösens eines Anfahrvorgangs zur jeweils anderen Stellposition verwendbar ist. Eine umfangreiche elektronische Schaltung entfällt somit.
Bei einer vorteilhaften Ausgestaltung sind höher frequente Stromanteile zur Datenübertragung zwischen dem stationären Teil und dem Teil vorgesehen. Von Vorteil ist dabei, dass ein anderes Frequenzband genutzt wird als das zur Leistungsübertragung benutzte. Der Leistungsübertragung ist vorteiligerweise ein schmales Frequenzband und der Datenübertragung ein breiteres Band zugeordnet.
Bei einer vorteilhaften Ausgestaltung ist zwischen der elektronischen Schaltung und den Verbrauchern ein serieller Datenbus und/oder Energiebus vorgesehen. Von Vorteil ist dabei, dass einfache und kostengünstige Systeme einsetzbar sind.

Bei einer vorteilhaften Ausgestaltung wird ein geringerer Datenstrom berührungslos übertragen als der Datenstrom im Datenbus auf dem Teil. Von Vorteil ist dabei, dass die Rechenleistung der elektronischen Leistung den zwischen Primärteil und Sekundärteil zu übertragenden Datenstrom vermindert. Somit sind hierbei niedrige Frequenzen verwendbar, die weniger gedämpft sind als höhere Frequenzen. Dabei wird als Primärleiter vorteiligerweise Hochfrequenz-Litze verwendet, also Litzendrähte, die gegeneinander isoliert ausgeführt sind.

Bei einer vorteilhaften Ausgestaltung wird durch Einschalten der berührungslos übertragenen Leistung, insbesondere des Starkstroms, eine Steuerinformation übertragen, wobei dadurch das Anfahren der jeweils anderen Anfahrposition der Stellantriebe ausgelöst wird. Von Vorteil ist dabei, dass kein aufwendiges Steuerprogramm sondern nur eine sehr einfach programmierbare Lösung verwendbar ist. Es ist sogar in der Folge und Dauer des Weglassens von positiver und/oder negativer Halbwelle des aus der Mittelfrequenzstromquelle in den Primärleiter eingespeisten Primärstroms Steuerinformation codierbar.

Weitere Vorteile ergeben sich aus den Unteransprüchen.

Die Erfindung wird nun anhand von Abbildungen näher erläutert:

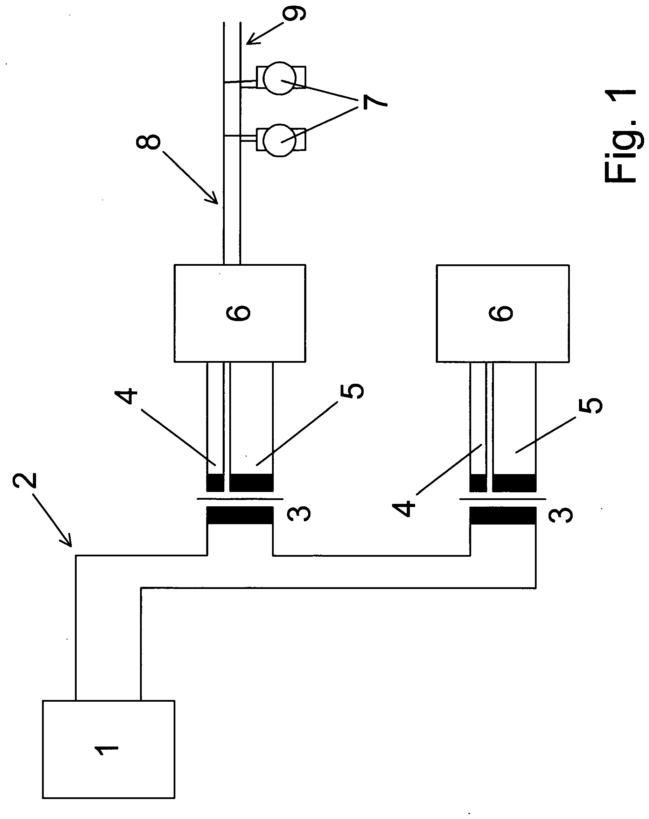

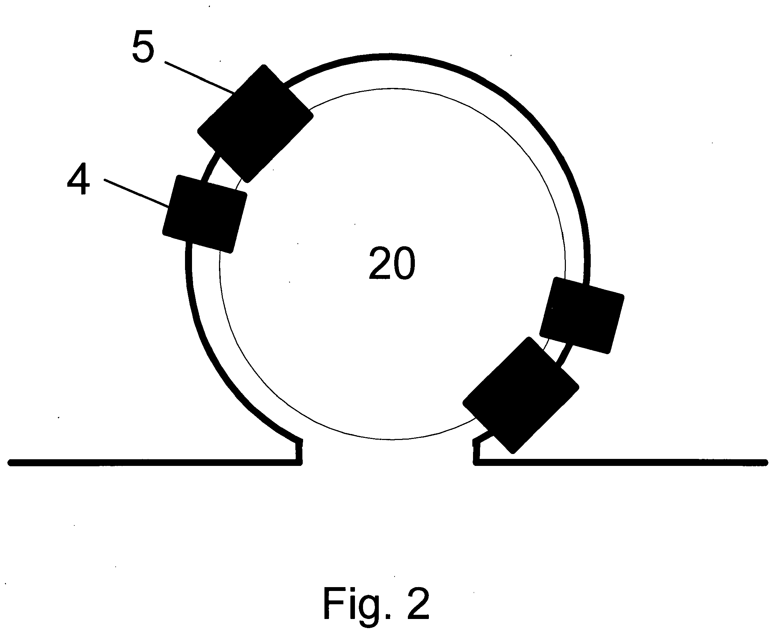

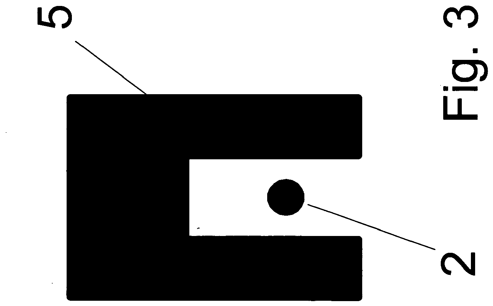

In der Figur 1 ist ein Prinzip-Schaltplan für eine erfindungsgemäße Vorrichtung gezeigt. In Figur 2 ist ein zugehöriger schematisierter Schnitt durch eine erfindungsgemäße Maschine gezeichnet. In Figur 3 ist ein Querschnitt durch den Drehübertrager gezeichnet.

Die Mittelfrequenzstromquelle 1 speist einen mittelfrequenten Wechselstrom in den Primärleiter 2 ein. Außerdem ist ein höher frequenter Stromanteil aufmoduliert zur Übertragung von Daten. Der Primärleiter 2 ist Teil des Übertragers 3, der auch eine induktiv an den Primärleiter 2 gekoppelte zweite Sekundärspule 4, insbesondere für Datenübertragung, und eine eine induktiv an den Primärleiter 2 gekoppelte erste Sekundärspule 5, insbesondere für Energieübertragung, umfasst. Somit ist nicht nur Energie sondern auch Information berührungslos übertragbar an ein anderes, beispielsweise drehbar oder verschiebbar gelagertes Maschinenteil. Vorteiligerweise ist das Maschinenteil galvanisch entkoppelt.

Auf dem Maschinenteil 20 ist eine elektronische Schaltung 6 angeordnet, die einerseits eine Kapazität umfasst, die derart angeordnet parallel oder seriell mit der ersten Sekundärspule beschaltet und dimensioniert ist, dass die zugehörige Resonanzfrequenz im Wesentlichen der Mittelfrequenz des in den Primärleiter 2 eingespeisten Stromes entspricht. Somit sind hohe Leistungen zwischen 10 Watt und 10 Kilowatt und mehr übertragbar.

Von der elektronischen Schaltung 6 wird somit die Leistung an nachgeordnete Verbraucher über den Energiebus 8 zugeführt. Der Energiebus 8 ist als Kabel ausführbar, wobei die Verbraucher elektrisch seriell oder parallel versorgt werden.

Die Verbraucher 7 sind beispielsweise als Antriebe, wie Elektromotoren, Getriebemotoren, Stellglieder, Elektrozylinder, Spindelmotoren und/oder elektrische Hubzylinder ausgeführt. Dabei sind die Antriebe linear oder rotatorisch ausgeführt.

Von der elektronischen Schaltung 6 aus ist auch ein Datenbus 9 mit Verbrauchern verbunden zum Datenaustausch.

Das Maschinenteil 20 ist rotierbar und/oder verschiebbar angeordnet.

Die erste Sekundärspule ist um einen U-förmigen Kern gewickelt, wie aus Figur 3 zu entnehmen ist.

Wie in Figur 2 gezeigt, sind zweite und erste Sekundärspule sind in Umfangsrichtung hintereinander angeordnet, insbesondere auf dem drehbar gelagerten Maschinenteil. Da die Kerne der Wicklungen nach außen hin, also in radialer Richtung offen sind, ist der Primärleiter an beliebigen Stellen am Umfang herausführbar und dort zu der Mittelfrequenzstromquelle hinführbar.

Im einfachsten Fall wird bei Einschalten des mittelfrequenten Wechselstromes Leistung an die Verbraucher übertragen und diese dann dadurch betätigt. Somit entfallen hierzu Steuersignale und der Datenbus und die zweite Sekundärspulen sind nicht notwendig. Bei bistabilen Elektrozylindern, die also nur zwei unterschiedliche Positionen anfahren sollen, ist somit keine besondere Steuerinformation notwendig.

In Weiterbildung ist auch eine Übertragung von Steuerinformation durch Verwendung von positiven oder negativen Halbwellen ermöglicht. Insbesondere ist die Modulation zweier unterschiedlicher Informationen durch Senden einer definierten Modulationsfrequenz in der positiven oder negativen Halbwelle der Energieversorgung ermöglicht.

Bei weiteren erfindungsgemäßen Ausführungsbeispielen sind auch Schalthandlungen einzelner Verbraucher, wie beispielsweise Elektrozylinder, realisierbar, auch wenn sie an einem einzigen elektrischen Versorgungsstrang, beispielsweise parallel oder seriell, angeordnet sind.

Vorteilhaft ist bei der Erfindung auch, dass die Mittelfrequenzstromquelle 1 als zentrale Einspeisungsquelle für Energie und Dateninformation auf den Primärleiter, der als Linienleiter ausführbar ist, ausführbar ist. Am Primärleiter sind, wie in Figur 1 gezeigt, sogar zwei oder mehr Drehübertrager anordenbar. Denn entlang dem als geschlossene Schleife verlegten Primärleiter sind an beliebigen Stellen Sekundärspulen anordenbar. Insbesondere sind zwei oder mehr Teilbereiche des Primärleiters kreisbogenförmig verlegbar. Auf diese Weise sind daher auch mehrere rotierende System versorgbar.

Die De- und/oder Aufmodulation der höher frequenten Stromanteile ist entweder induktiv, wie in Figur 1 gezeigt, oder bei weiteren erfindungsgemäßen Ausführungsbeispielen kapazitiv ausgeführt.

Bei weiteren erfindungsgemäßen Ausführungsbeispielen ist die elektronische Schaltung 6 zusätzlich auch um eine Steuerung erweitert ausgeführt. Somit sind die Verbraucher als Busteilnehmer ausführbar und mit der Schaltung 6 verbindbar. Auf diese Weise ist die berührungslos zu übertragende Datenmenge reduzierbar. Darüber hinaus ist bei einer um eine Steuerung erweiterte elektronischen Schaltung 6 das bewegbar angeordnete Maschinenteil einzeln prüfbar und funktionsfähig. Wenn mehrere bewegbar angeordnete Maschinenteile vorgesehen sind, denen jeweils ein Drehübertrager zugeordnet ist, gilt dies für das jeweilige Maschinenteil. Die Drehübertrager sind dabei in Reihe verschaltbar.

Bei weiteren erfindungsgemäßen Ausführungsbeispielen ist das Maschinenteil mit Hohlwelle ausgeführt, so dass die erfindungsgemäßen Verbraucher, die elektronische Schaltung 6 und/oder der Energiebus 6 zumindest teilweise im Inneren der Hohlwelle vorgesehen sind.

Statt eines U-förmigen Kerns sind bei weiteren erfindungsgemäßen Ausführungsbeispielen auch C-förmige oder E-förmige Kerne verwendbar. Bei letztgenannten ist ein Hinleiter der geschlossen verlegten Primärleiterschleife im vom Mittelschenkel und einem ersten Außenschenkel begrenzten Bereich und ein Rückleiter der geschlossen verlegten Primärleiterschleife im vom Mittelschenkel und dem anderen Außenschenkel begrenzten Bereich verlegbar. Bei U-förmigem oder C-förmigem Kern ist ein Hinleiter der geschlossen verlegten Primärleiterschleife in dem von den Außenschenkeln begrenzten Bereich verlegt.

### Bezugszeichenliste

1 Mittelfrequenzstromquelle
2 Primärleiter
3 Übertrager
4 zweite Sekundärspule, insbesondere für Datenübertragung
5 erste Sekundärspule, insbesondere für Energieübertragung
6 elektronische Schaltung
7 Verbraucher, insbesondere Antriebe
8 Energiebus
9 Datenbus
20 rotierendes Maschinenteil

## Patentansprüche

1. Anlage oder Maschine, umfassend ein bewegbar angeordnetes Teil (20),
wobei am bewegbar angeordneten Teil (20) zumindest eine Sekundärspule (5), eine elektronische Schaltung (6) und zumindest ein Verbraucher (7) vorgesehen ist,
wobei die Sekundärspule (5) induktiv an einen Primärleiter (2) ankoppelbar oder angekoppelt ist und dabei Daten und elektrische Leistung berühungslos übertragen werden,
wobei aus der Sekundärspule (5) die elektronische Schaltung (6) versorgt wird und aus der elektronischen Schaltung (6) der zumindest eine Verbraucher versorgbar ist,
wobei die elektronische Schaltung (6) und der zumindest eine Verbraucher (7) zum Datenaustausch über einen Datenbus (9) verbunden sind,
**gekennzeichnet dadurch dass**
der zumindest eine
oder mehrere Verbraucher (7) als bistabile Stellantriebe ausgeführt sind, wobei das Einschalten oder Abschalten der Energiezufuhr als Steuerinformation einen Anfahrvorgang zur jeweils anderen Stellposition auslöst,
wobei Mittel zur Auf- und Demodulation höher frequenter Stromanteile auf den Primärleiter (2) vorgesehen sind,
wobei die höher frequenten Stromanteile auf dem Primärleiter (2) zur Datenübertragung zwischen einem stationären Teil und dem bewegbar angeordneten Teil (20) vorgesehen sind, wobei der Datenbus (9) zwischen der elektronischen Schaltung und dem zumindest einen Verbraucher (7) ein serieller Datenbus ist.

2. Anlage oder Maschine nach Anspruch 1,
**dadurch gekennzeichnet, dass**
der Primärleiter (2) zumindest mit einem mittelfrequenten Strom beaufschlagt ist, insbesondere mit einer Frequenz zwischen 10 und 100 kHz, wobei der Sekundärspule (5) ein Kondensator in Reihe oder parallel beschaltet ist, wobei die zugehörige Resonanzfrequenz im Wesentlichen der Mittelfrequenz entspricht.

3. Anlage oder Maschine nach mindestens einem der vorangegangenen Ansprüche,
**dadurch gekennzeichnet, dass**
zumindest eine Komponente des bewegbar angeordneten Teils (20) zur Datenübertragung mit dem Primärleiter (2) induktiv oder kapazitiv gekoppelt vorgesehen ist.

4. Anlage oder Maschine nach mindestens einem der vorangegangenen Ansprüche,
**dadurch gekennzeichnet, dass**
eine zweite Sekundärspule (4) für Datenübertragung am bewegbar angeordneten Teil (20) vorgesehen ist.

5. Anlage oder Maschine nach mindestens einem der vorangegangenen Ansprüche,
**dadurch gekennzeichnet, dass**
zumindest ein Teilbereich des Primärleiters (2) kreisbogenförmig um das bewegbar angeordnete Teil (20) herum verlegt ist.

6. Anlage oder Maschine nach mindestens einem der vorangegangenen Ansprüche,
**dadurch gekennzeichnet, dass**
der zumindest eine oder mehrere Verbraucher (7) als Antriebe ausgeführt sind, mit denen zwei oder mehr stabile Anfahrpositionen, insbesondere nur zwei oder mehr stabile Anfahrpositionen, anfahrbar sind.

7. Anlage oder Maschine nach mindestens einem der vorangegangenen Ansprüche,
**dadurch gekennzeichnet, dass**
ein geringerer Datenstrom berührungslos übertragen wird als der Datenstrom in dem Datenbus (9) auf dem bewegbar angeordneten Teil (20).

## Claims

1. An installation or machine, comprising a movably arranged part (20),
wherein at least one secondary coil (5), an electronic circuit (6) and at least one consumer (7) is provided on the movably arranged part (20),
wherein the secondary coil (5) can be or is coupled inductively to a primary conductor (2), and in so doing data and electric power are transmitted in contactless manner,
wherein the electronic circuit (6) is supplied from the secondary coil (5) and the at least one consumer can be supplied from the electronic circuit (6),
wherein the electronic circuit (6) and the at least one consumer (7) are connected for data exchange purposes via a data bus (9),
**characterised in that**
the at least one or more consumer(s) (7) is/are embodied as bistable actuators, wherein the switching-on or switching-off of the power supply as control information triggers a starting operation to the other actuating position in each case,
wherein means for modulation and demodulation of higher-frequency current components are provided on the primary conductor (2),
wherein the higher-frequency current components on the primary conductor (2) are provided for data transfer between a stationary part and the movably arranged part (20),
wherein the data bus (9) between the electronic circuit and the at least one consumer (7) is a serial data bus.

2. An installation or machine according to Claim 1,
**characterised in that**
the primary conductor (2) is supplied at least with a medium-frequency current, in particular with a frequency of between 10 and 100 kHz, with a capacitor being connected in series or in parallel to the secondary coil (5), the associated resonant frequency substantially corresponding to the medium frequency.

3. An installation or machine according to at least one of the preceding claims,
**characterised in that**
at least one component part of the movably arranged part (20) is provided inductively or capacitatively coupled with the primary conductor (2) for data transfer purposes.

4. An installation or machine according to at least one of the preceding claims,
**characterised in that**
a second secondary coil (4) is provided on the movably arranged part (20) for data transfer purposes.

5. An installation or machine according to at least one of the preceding claims,
**characterised in that**
at least a partial region of the primary conductor (2) is laid in an arc shape around the movably arranged part (20).

6. An installation or machine according to at least one of the preceding claims,
**characterised in that**
the at least one or more consumer(s) (7) is/are embodied as drives, with which two or more stable starting positions, in particular only two or more stable starting positions, are able to be approached.

7. An installation or machine according to at least one of the preceding claims,
**characterised in that**
a smaller data stream is transmitted in contactless manner than the data stream in the data bus (9) on the movably arranged part (20).

## Revendications

1. Installation ou machine comprenant une partie (20) agencée avec mobilité, au moins une bobine secondaire (5), un circuit électronique (6) et au moins un appareil consommateur (7) étant prévus sur ladite partie (20) agencée avec mobilité,
sachant que ladite bobine secondaire (5) peut être couplée, ou est couplée par induction avec un conducteur primaire (2), des données et une puissance électrique étant alors transmises sans contact,
le circuit électronique (6) étant alimenté à partir de ladite bobine secondaire (5), et l'appareil consommateur (7) à présence minimale pouvant être alimenté à partir dudit circuit électronique (6),
ledit circuit électronique (6) et ledit appareil consommateur (7) à présence minimale étant raccordés par l'intermédiaire d'un bus de données (9), en vue de l'échange de données, **caractérisée par le fait que**
l'appareil consommateur à présence minimale, ou plusieurs appareils consommateurs (7), est (sont) réalisé(s) sous la forme d'actionneurs bistables, la mise en circuit ou hors circuit de la délivrance d'énergie, en tant qu'information de commande, déclenchant un processus de démarrage vers l'emplacement de réglage respectivement autre,
sachant que des moyens sont prévus pour la modulation et la démodulation de composants de courant à fréquence supérieure, sur le conducteur primaire (2),
lesquels composants de courant à fréquence supérieure sont prévus, sur ledit conducteur primaire (2), pour la transmission de données entre une partie fixe et la partie (20) agencée avec mobilité,
sachant que ledit bus de données (9), entre le circuit électronique et l'appareil consommateur (7) à présence minimale, est un bus de données sériel.

2. Installation ou machine selon la revendication 1,
**caractérisée par le fait que**
le conducteur primaire (2) est sollicité au moins par un courant de fréquence moyenne présentant, en particulier, une fréquence comprise entre 10 et 100 kHz, un condensateur étant branché en série ou en parallèle avec la bobine secondaire (5), sachant que la fréquence de résonance associée correspond, pour l'essentiel, à ladite fréquence moyenne.

3. Installation ou machine selon au moins l'une des revendications précédentes,
**caractérisée par le fait**
**qu'**au moins un élément constitutif de la partie (20) agencée avec mobilité est prévu en un couplage inductif ou capacitif avec le conducteur primaire (2), en vue de la transmission de données.

4. Installation ou machine selon au moins l'une des revendications précédentes,
**caractérisée par le fait**
**qu'**une seconde bobine secondaire (4) est prévue sur la partie (20) agencée avec mobilité, à des fins de transmission de données.

5. Installation ou machine selon au moins l'une des revendications précédentes,
**caractérisée par le fait**
**qu'**au moins une région partielle du conducteur primaire (2) est posée en arc de cercle tout autour de la partie (20) agencée avec mobilité.

6. Installation ou machine selon au moins l'une des revendications précédentes,
**caractérisée par le fait**
**que** l'appareil consommateur à présence minimale, ou plusieurs appareils consommateurs (7), est (sont) réalisé(s) sous la forme d'entraînements permettant d'accéder à des emplacements de démarrage stables au nombre de deux ou plus, en particulier à des emplacements de démarrage stables uniquement au nombre de deux ou plus.

7. Installation ou machine selon au moins l'une des revendications précédentes,
**caractérisée par**
la transmission, sans contact, d'un flux de données moindre que le flux de données circulant dans le bus de données (9) sur la partie (20) agencée avec mobilité.
